# EUROPÄISCHE PATENTSCHRIFT

(11) **EP 3 308 909 B1**
(45) Veröffentlichungstag und Bekanntmachung des Hinweises auf die Patenterteilung: **22.12.2021**
(21) Anmeldenummer: 17189144.3
(22) Anmeldetag: 04.09.2017
(51) Int. Cl.: B25J 9/02, B25J 9/12, B25J 9/04, B25J 5/02, B29C 45/42

(54) **HANDHABUNGSEINRICHTUNG**
HANDLING DEVICE
DISPOSITIF DE MANIPULATION

(30) Priorität: 12.10.2016 DE 102016119470
(43) Veröffentlichungstag der Anmeldung: 18.04.2018
(73) Patentinhaber: Klaus-Dieter Klement Verwaltungs GmbH, 06667 Weißenfels (DE)
(72) Erfinder: KLEMENT, Timo Alexander, 52428 Jülich (DE)
(74) Vertreter: Lorenz, Bernd Ingo Thaddeus

(56) Entgegenhaltungen:
- DE-A1-102004 026 453
- DE-A1-102014 014 265
- DE-U1-202006 010 312
- DE-U1-202016 100 689

## Beschreibung

Die Erfindung betrifft eine Handhabungseinrichtung, insbesondere für Spritzgussanlagen, mit einer ersten Linearführung, eine auf einem entlang der ersten Linearführung verfahrbaren ersten Schlitten befestigten zweiten Linearführung und einem auf einem entlang der zweiten Linearführung verfahrbaren zweiten Schlitten befestigten Handhabungsmodul, wobei zwischen dem ersten Schlitten und der zweiten Linearführung eine Schwenkeinrichtung mit einem Motor angeordnet ist, über die die zweite Linearführung auf der ersten Linearführung verdrehbar gelagert ist.

Handhabungseinrichtungen der eingangs beschriebenen Art sind bereits seit vielen Jahren ein wichtiger Bestandteil bei der Automatisierung von Produktionsmaschinen. So dienen sie beispielsweise dazu, in einer Spritzgussanlage gefertigte Formteile mittels eines Greifers zu entnehmen und beispielsweise an eine weitere Verarbeitungsstation zu übergeben. Durch die Anordnung mehrerer zueinander senkrecht ausgerichteter Linearführungen kann einerseits ein großer Bereich abgedeckt, und andererseits durch die Linearführungen eine hohe Stellgeschwindigkeit erzielt werden kann. Durch diese hohe Stellgeschwindigkeit eignen sich daher derartige Handhabungseinrichtungen vor allem für Transportvorgänge mit einer hohen Wiederholungsfrequenz. Nachteilig ist hierbei allerdings, dass durch die feste Anordnung der Linearführungen zueinander nur ein sehr eingeschränkter Bereich von der Handhabungseinrichtung erfasst werden kann. Aus diesem Grunde hat sich gezeigt, dass es zweckmäßig ist, die erste und die zweite Linearführung drehbar zueinander auszugestalten. Durch diese drehbare Ausgestaltung kann die zweite Linearführung gegen die erste Linearführung verschwenkt werden, so dass sich der Handhabungsbereich nunmehr nicht nur auf eine Seite der ersten Linearführung, sondern auf beide Seiten der Linearführung erstreckt. Zusätzlich bildet sich an beiden Endlagen der ersten Linearführung ein zusätzlicher Schwenkbereich aus, dessen Radius im Wesentlichen von der Länge der zweiten Linearführung abhängig ist. Durch eine solche Anordnung kann daher der Handhabungsbereich deutlich vergrößert werden ohne dass auf die Vorteile von Linearführungen, insbesondere die hohen Stellgeschwindigkeiten, verzichtet werden muss.

Eine solche Handhabungsmaschine zeigt beispielsweise die US 7,476,072 B2. Die zweite Linearführung ist drehbar auf einem Schlitten der ersten Linearführung gelagert und weist ein Zahnrad auf, das radial außenliegend in ein weiteres Zahnrad eingreift, wobei das weitere Zahnrad über einen außen am Schlitten befestigten Motor angetrieben wird. Hierbei sind die Zahnräder derart ausgestaltet, dass ausgehend von dem vom Motor angetriebenen Zahnrad eine starke Untersetzung erfolgt. Diese Untersetzung führt zu relativ niedrigen Stellgeschwindigkeiten. Diese niedrigen Stellgeschwindigkeiten sind allerdings bewusst gewählt, um hierdurch das Entstehen rotationsbedingter Vibrationen zu vermeiden. Dies ist bei einer derart ausgestalteten Schwenkeinrichtung besonders daher problematisch, da der Antrieb in Form des ersten Zahnrades und die Schwenkeinrichtung mit dem zweiten Zahnrad zwei unterschiedliche Drehachsen aufweisen.

Für derartige mit Linearführungen ausgestaltete Handhabungseinrichtungen stellen hohe Stellgeschwindigkeiten aber ein besonders wichtiges Kriterium dar, da nur hierdurch die zuvor erwähnte Wiederholungsfrequenz erreicht werden kann.

Aus der DE 20 2006 010 312 U1 ist eine Vorrichtung bekannt, bei der unter einem Tragarm an einem Schlitten hängend eine Linearführung schwenkbar angeordnet ist, an der ein Handhabungswerkzeug in Hubrichtung entlang bewegt werden kann.

Der vorliegenden Erfindung liegt daher die Aufgabe zugrunde, die bereits bekannten Handhabungseinrichtungen zu verbessern und die Stellgeschwindigkeit auf eine einfache und kostengünstige Weise zu erhöhen.

Hierzu lehrt die Erfindung eine Handhabungseinrichtung gemäß Anspruch 1.

Durch die Verwendung eines Direktmotors wird bewusst auf ein Getriebe verzichtet, so dass die Stellgeschwindigkeit allein von der Stellgeschwindigkeit des Direktmotors abhängt. Somit weist die Schwenkeinrichtung mit dem Direktmotor und auch die darauf angeordnete zweite Linearführung dieselbe Rotationsachse auf, weshalb insbesondere rotationsbedingte Vibrationen stark vermindert werden können. Hierzu trägt auch das koaxial zu dem Direktmotor angeordnete Axial-Radiallager bei, mit dem die zweite Linearführung auf dem ersten Schlitten abgestützt ist. Mit derartigen Axial-Radiallagern können einerseits das Gewicht der zweiten Linearführung sowie der daran angeordneten Lasten besonders gut abgestützt und andererseits hohe Stellgeschwindigkeiten bei niedrigem Verschleiß verwirklicht werden.

Vorzugsweise weist das Axial-Radiallager hierzu eine radiale Rollenlagerbahn und zumindest eine axiale Rollenlagerbahn auf, wobei es sich bei den Rollen um Zylinderrollen handelt. Derartige Lager sind gemeinhin auch als YRT-Lager aus der Praxis bekannt und zeichnen sich durch eine hohe Belastbarkeit und Steifigkeit bei gleichzeitig sehr geringem Bauraum aus. Bevorzugt weist das Axial-Radiallager zwei axiale Rollenlagerbahnen auf, zwischen denen das zu rotierende Bauteil eingespannt wird, so dass sowohl Druck- als auch Zugbelastungen von dem Axial-Radiallager aufgenommen werden können. Dies ist insbesondere entscheidend, wenn das von dem Handhabungsmodul getragene Gewicht bei einem weit ausgefahrenen zweiten Schlitten ein großes Kippmoment erzeugt.

Grundsätzlich liegt es aber auch im Rahmen der Erfindung, dass anstelle von Zylinderrollen Kegelrollen Anwendung finden, wobei in einem solchen Fall die radiale Rollenlagerbahn mit der bzw. mit den axialen Rollenlagerbahnen zusammenfällt.

In einer bevorzugten Weiterbildung der Erfindung weist der Direktmotor einen radial innenliegenden Stator und einen radial außenliegenden Rotor auf, wobei der Stator auf dem ersten Schlitten und die zweite Linearführung auf dem Rotor angeordnet ist. Hierbei meint Stator den Teil des Direktmotors, der Spulen in Form von mit Draht umwickelten Blechpaketen aufweist, während am Rotor in Umfangsrichtung vollumschließend Permanentmagnete angeordnet sind. Bei einem radial außenliegenden Rotor greift dabei auf besonders vorteilhafte Weise die zwischen den Wicklungen und den Permanentmagneten zu übertragende Kraft auf einem vergleichsweise großen Radius an, weshalb mit derartigen Direktmotoren größere Drehmomente übertragen werden können als bei einem radial innenliegenden Rotor. Hohe Drehmomente sind wichtig, um bei niedrigen Drehzahlen beschleunigen zu können. Dies stellt einen entscheidenden Punkt bei der Verwirklichung von hohen Stellgeschwindigkeiten dar, da in der Praxis bei derartigen Handhabungsmaschinen die Beschleunigungs- und die Abbremsphase anteilsmäßig den überwiegenden Teil eines Transportabschnittes ausmachen.

Bevorzugt weist die Schwenkeinrichtung einen mit dem Rotor verbundenen Rotordeckel auf, an dem die zweite Linearführung befestigt ist. Gemäß den allgemein üblichen Ausgestaltungsformen von Direktmotoren handelt es sich beim Rotor und beim Stator um im Wesentlichen zylindrische Bauteile, wobei gemäß einer bevorzugten Ausgestaltung der zylindrische Rotor radial außenliegend um den zylindrischen Stator rotiert. Zur Übertragung dieser Rotation ist nunmehr auf einer Stirnfläche des zylindrischen Rotors ein Rotordeckel befestigt, der sich ausgehend von dem Rotor radial nach innen erstreckt und hierbei entweder eine ringförmige oder scheibenförmige Gestalt aufweist. Dieser Rotordeckel kann ferner Befestigungsmöglichkeiten, z. B. Bohrungen oder Gewindebohrungen, aufweisen über die die zweite Linearführung an dem Rotordeckel befestigbar bzw. befestigt ist.

In einer bevorzugten Weiterbildung der Erfindung ist zwischen dem Rotordeckel und dem Stator das Axial-Radiallager angeordnet. Der Rotordeckel bildet hierbei bevorzugt mit dem Axial-Radiallager eine Einheit, die gemeinsam an dem Stator befestigt wird.

Gemäß einer bevorzugten Ausgestaltung der Erfindung weist die Schwenkeinheit einen radial innenliegenden Dorn auf, der sich durch den Stator erstreckt. Der Dorn ist hierbei vorzugsweise mit dem Rotordeckel verbunden, z. B. verschraubt, wobei der Dorn hohl ausgestaltet werden kann, so dass gemeinsam mit einem als Ring ausgestalteten Rotordeckel die Durchführung von Medienleitungen grundsätzlich ermöglicht wird. Vorrangig soll mit einem solchen Dorn jedoch die Stabilität der Schwenkeinheit erhöht werden.

Hierzu ist bevorzugt zwischen dem Dorn und dem Stator ein zusätzliches Wälzlager angeordnet, so dass die radialen Kräfte nicht allein über das Axial-Radiallager sondern zusätzlich über das am Dorn angeordnete Wälzlager aufgenommen werden können.

In einer bevorzugten Ausgestaltung der Erfindung weist das Handhabungsmodul eine Aufnahmeeinrichtung auf. Mit Hilfe derartiger Aufnahmeeinrichtungen lassen sich Gegenstände, z. B. Werkstücke, an der Handhabungseinrichtung fixieren und entlang der Linearführungen transportieren. Nach Erreichen einer Endposition wird der Gegenstand wiederum von der Handhabungseinrichtung gelöst. Grundsätzlich eignen sich unterschiedliche Arten von Vorrichtungen zur Aufnahme von Gegenständen. Diese Aufnahmeeinrichtungen können beispielsweise magnetisch betrieben werden, wobei die zu transportierenden Gegenstände auf einige metallische Gegenstände beschränkt sind. Aus diesem Grunde kommt bevorzugt ein Greifer zum Einsatz, der entweder elektrisch, pneumatisch oder hydraulisch betrieben wird. Ein solcher Greifer fixiert den Gegenstand durch zwei gegen den Gegenstand drückende Klemmbacken. Durch Lösen der Klemmbacken kann bei Erreichen einer Endposition der Handhabungseinrichtung der Gegenstand wieder abgelegt werden. Zum Betreiben eines solchen Greifers ist je nach gewählter Ausführungsform eine externe elektrische, pneumatische oder hydraulische Versorgungseinrichtung vorgesehen.

Gemäß einer bevorzugten Weiterbildung der Erfindung weist das Handhabungsmodul eine dritte Linearführungseinheit auf, an der die Aufnahmeeinrichtung befestigt ist. Die dritte Linearführungseinheit weist ebenfalls eine dritte Linearführung sowie einen dritten Schlitten auf, wobei der dritte Schlitten entlang der dritten Linearführung verfahrbar angeordnet ist. Durch Einbeziehen einer dritten Linearführung in die Handhabungseinrichtung kann nunmehr der Handhabungsbereich in alle drei Raumkoordinaten erweitert werden, wobei die dritte Linearführung vorzugsweise für eine Höhenänderung vorgesehen ist.

Hierzu ist nun nicht mehr die dritte Linearführung am zweiten Schlitten befestigt, sondern direkt der dritte Schlitten, so dass die dritte Linearführung durch den dritten Schlitten bewegt werden kann. Die Aufnahmeeinrichtung ist bei einer derartigen Ausgestaltung vorzugsweise an einem Ende der dritten Linearführung angeordnet.

Es sind daher nun auch Transportprozesse denkbar, bei denen die Handhabungseinrichtung mit der dritten Linearführung von oben herab in eine Maschine hineingreift, dort über die Aufnahmeeinrichtung einen Gegenstand aufnimmt, dieses nach oben hin aus der Maschine hinausnimmt und an einen weiteren Ort im Handhabungsbereich überführt.

Es liegt aber auch grundsätzlich im Rahmen der Erfindung, dass die dritte Lineareinheit nicht mit dem dritten Schlitten, sondern mit der dritten Linearführung am zweiten Schlitten befestigt ist, so dass die Lage aller Linearführungen im Wesentlichen festgelegt ist und Änderungen nur über die darauf verfahrbar angeordneten Schlitten erfolgen.

Wenngleich die Schwenkeinrichtung den erfindungsgemäßen Kern der Erfindung darstellt, so kann eine hohe Stellgeschwindigkeit vornehmlich nur durch hohe Fahrgeschwindigkeiten entlang der Linearführungen gewährleistet werden. Aus diesem Grunde werden die Schlitten bevorzugt jeweils über einen Linearmotor angetrieben. Alternativ sind auch Spindelantriebe möglich, wobei aufgrund der damit erzielbaren höheren Haltekräfte derartige Antriebe vorzugsweise bei Höhenänderungen zum Einsatz kommen, um damit die Gewichtskräfte besser abstützen zu können.

Einen weiteren Aspekt der Erfindung betrifft neben der Handhabungseinrichtung auch eine Spritzgussmaschine nach Anspruch 11 mit einem Maschinengestell und einer darauf angeordneten erfindungsgemäßen Handhabungseinrichtung.

Bei Spritzgussmaschinen handelt es sich um Maschinen, die aus Kunststoff in Form von Granulat oder Schnüren Kunststoffteile herstellen. Dazu wird in der sogenannten Spritzeinheit die benötigte Kunststoffmasse durch Aufschmelzen des Granulats bzw. der Schnur aufbereitet und über eine Schnecke in ein Werkzeug gepresst, wobei das Werkzeug die negative Form des zu fertigenden Kunststoffteils aufweist. Nach Abschluss des Vorganges kann das so gefertigte Kunststoffteil der Spritzgussmaschine entnommen werden. Hierzu ist auf dem Maschinengestell eine Handhabungseinrichtung angeordnet, die über eine Aufnahmeeinrichtung das Kunststoffteil entnimmt und dieses beispielsweise in einen Transportbehälter transportiert. Eine weitere Möglichkeit besteht darin, dass das Werkzeug in eine weitere Verarbeitungsstation transportiert wird. Da derartige Handhabungssystem aufgrund der Linearführungen einen entsprechenden Bauraum benötigen, sind diese vorzugsweise turmartig aufgebaut, so dass eine Entnahme des Kunststoffteils aus der Spritzgussmaschine von oben herab erfolgt. Aufgrund dieses turmartigen Aufbaus können mehrere Spritzgussmaschinen bzw. auch eventuell vorhandene weitere Verarbeitungsstationen möglichst platzsparend in einer Werkhalle angeordnet werden.

Die Erfindung wird im Folgenden anhand einer lediglich ein Ausführungsbeispiel darstellenden Zeichnung erläutert. Es zeigen:
- Fig. 1: eine isometrische Ansicht der erfindungsgemäßen Handhabungseinrichtung,
- Fig. 2: eine Ansicht der erfindungsgemäßen Handhabungseinrichtung in Richtung der ersten Linearführung,
- Fig. 3: eine Explosionsdarstellung der Schwenkeinheit und
- Fig. 4: eine Querschnittsansicht der Schwenkeinrichtung.

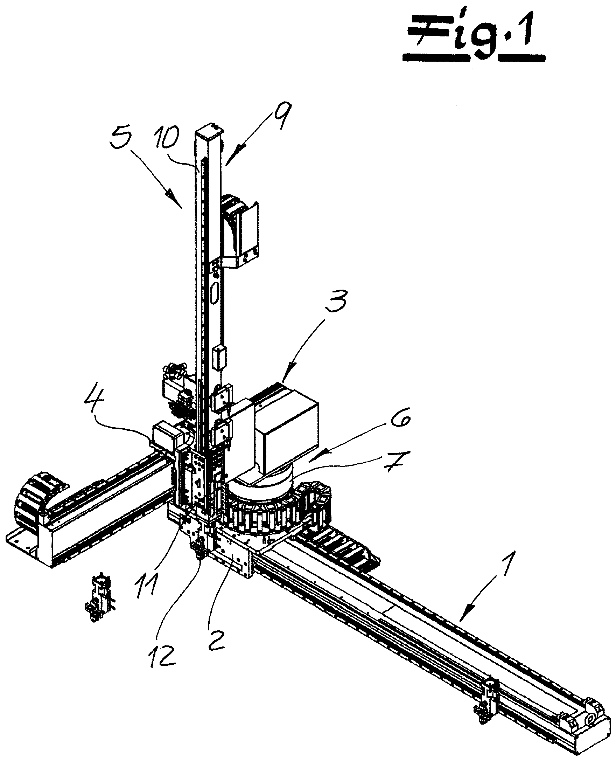

Fig. 1 zeigt eine Handhabungseinrichtung für Spritzgussanlagen mit einer ersten Linearführung 1, einer auf einem entlang der ersten Linearführung 1 verfahrbaren ersten Schlitten 2 befestigten zweiten Linearführung 3 und einem auf einem entlang der zweiten Linearführung 3 verfahrbaren zweiten Schlitten 4 befestigten Handhabungsmodul 5.

Zwischen dem ersten Schlitten 2 und der zweiten Linearführung 3 ist ferner eine Schwenkeinrichtung 6 mit einem Direktmotor 7 angeordnet, über die die zweite Linearführung 3 auf der ersten Linearführung 1 verdrehbar gelagert ist. Hierzu sind vorzugsweise alle Komponenten der zweiten Linearführung 3 bzw. alle weiteren Komponenten, die an der zweiten Linearführung 3 befestigt sind, wie beispielsweise der zweite Schlitten 4, oberhalb der ersten Linearführung 1 und dem darauf angeordneten ersten Schlitten 2 angeordnet, so dass grundsätzlich eine Drehbewegung der Schwenkeinrichtung 6 um 360° möglich ist.

Der Direktmotor 7 ist ferner koaxial zu zu einem in der Fig. 1 nicht näher dargestellten Axial-Radiallager 8 angeordnet mit dem die zweite Linearführung 3 auf dem ersten Schlitten 2 abgestützt ist.

Die in der Fig. 1 gezeigte Handhabungseinrichtung ist vorzugsweise derart angeordnet, dass sowohl die erste Linearführung 1 und auch die zweite Linearführung 3 parallel zu einer Boden- bzw. Oberfläche ausgerichtet sind. Somit ist ein Transport über einen ebenen durch die beiden Linearführungen 1, 2 aufgespannten Handhabungsbereich möglich.

Das Handhabungsmodul 5 weist ferner eine dritte Linearführungseinheit 9 mit einer dritten Linearführung 10 und einem dritten Schlitten 11 auf. Der dritte Schlitten 11 ist unmittelbar am zweiten Schlitten 4 befestigt, so dass im Gegensatz zu der ersten Linearführung 1 und der zweiten Linearführung 3 die gesamte dritte Linearführung verfahrbar gelagert ist. Hierbei ist die dritte Linearführung 10 sowohl zur ersten als auch zur zweiten Linearführung 1, 3 senkrecht ausgerichtet, so dass eine Höhenverstellung ermöglicht wird.

An der dritten Linearführung 10 ist ferner am unteren Ende eine Aufnahmeeinrichtung 12 befestigt, über die Gegenstände sowohl aufgenommen als auch wieder abgelegt werden können. Bei dem gezeigten Beispiel handelt es sich bei der Aufnahmeeinrichtung 12 um einen mechanischen Greifer.

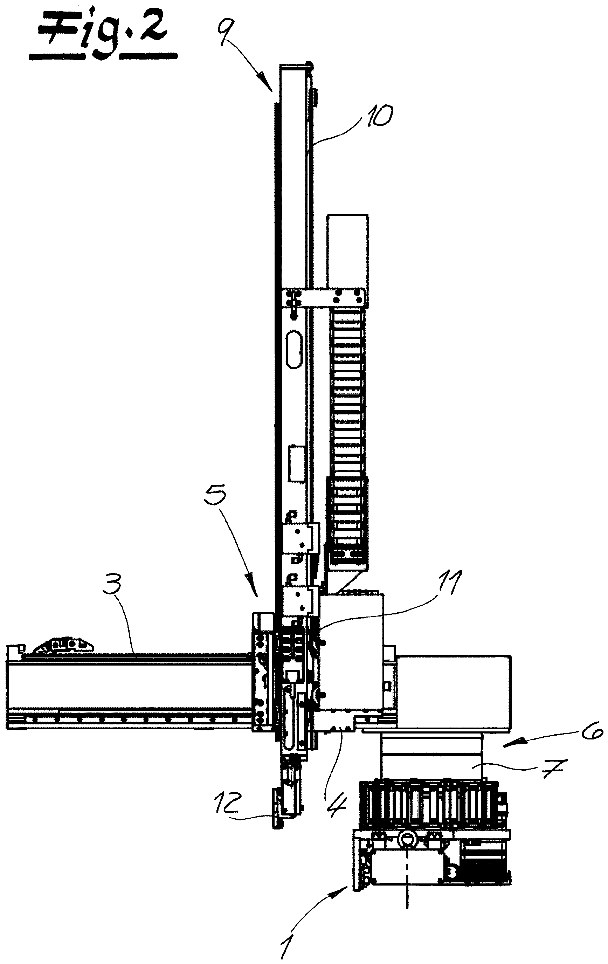

Auch die Fig. 2 zeigt die erfindungsgemäße Handhabungseinrichtung, wobei eine Ansicht in Richtung der ersten Linearführung 1 dargestellt ist.

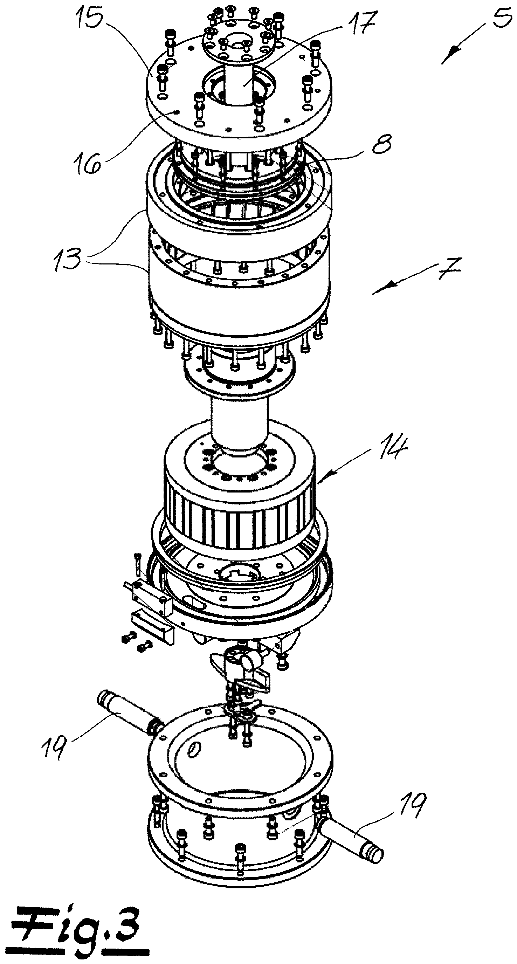

Die Fig. 3 zeigt eine Explosionsdarstellung der Schwenkeinrichtung 5, wobei die einzelnen Komponenten und deren Anordnung zueinander verdeutlicht werden.

Die Schwenkeinrichtung 5 weist einen Direktmotor 7 mit einem Rotor 13 und einem Stator 14 auf. Sowohl der Rotor 13 als auch der Stator 14 sind zylinderförmig ausgestaltet, wobei der Rotor 13 radial außenliegend um den Stator 14 rotierbar ist. An der oberen Stirnseite des Rotors 13 ist ferner ein Rotordeckel 15 befestigt, der Befestigungsbohrungen 16 zur Befestigung der zweiten Linearführung 3 aufweist.

Zwischen dem Rotordeckel 15 und dem Stator 14 ist ein Axial-Radiallager 8 angeordnet, wobei der Direktmotor 7 mit dem Stator 14 und dem Rotor 13 koaxial zu dem Axial-Radiallager 8 angeordnet ist. Über das Axial-Radiallager 8 ist die zweite Linearführung 3 über den Rotordeckel 16 auf dem ersten Schlitten 1 abgestützt.

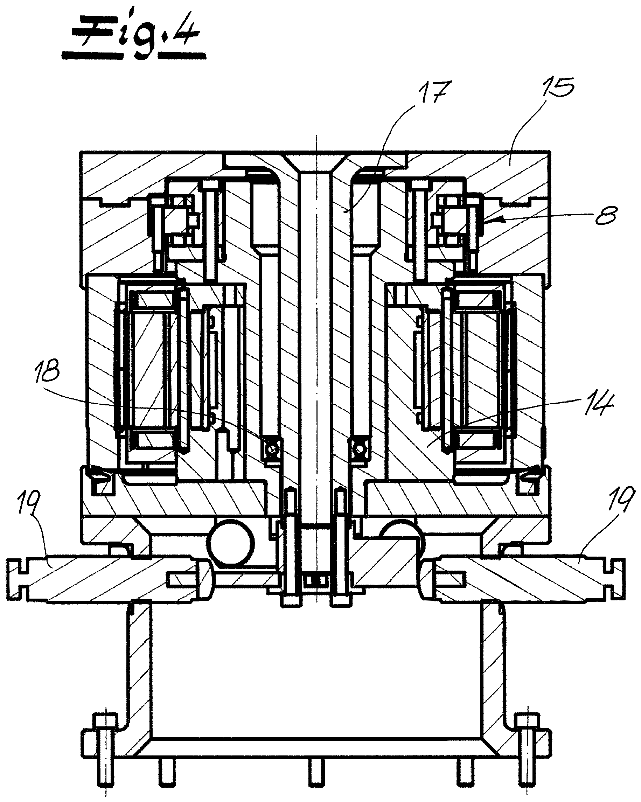

Eine vergleichende Betrachtung mit der Fig. 4 zeigt, dass das Axial-Radiallager 8 eine obere und eine untere axiale Rollenlagerbahn sowie eine radial innenliegende radiale Rollenlagerbahn aufweist. Über die beiden axialen Rollenlagerbahnen lassen sich über das Axial-Radiallager 8 sowohl Druck- als auch Zugkräfte aufnehmen.

Die Schwenkeinrichtung 6 weist darüber hinaus einen radial innenliegenden Dorn 17 auf, der in dem gezeigten Beispiel an der inneren Kontur des Rotordeckels 15 befestigt ist. Der Dorn 17 erstreckt sich hierbei durch den Stator 14 hindurch, so dass durch ein zusätzliches Wälzlager 18, das zwischen dem Dorn 17 und dem Stator 14 angeordnet ist eine zusätzliche Stabilität der Schwenkeinrichtung 6 gewährleistet werden kann.

Darüber hinaus wirkt der Dorn 17 endseitig mit Stoßdämpfern 19 zusammen, über die Stöße, insbesondere bei starken Beschleunigungs- oder Abbremsvorgängen der Schwenkeinrichtung 6, gedämpft werden können.

## Patentansprüche

1. Handhabungseinrichtung, insbesondere für Spritzgussanlagen, mit einer ersten Linearführung (1), einer auf einem entlang der ersten Linearführung (1) verfahrbaren ersten Schlitten (2) befestigten zweiten Linearführung (3) und einem auf einem entlang der zweiten Linearführung (3) verfahrbaren zweiten Schlitten (4) befestigten Handhabungsmodul (5),
wobei zwischen dem ersten Schlitten (2) und der zweiten Linearführung (3) eine Schwenkeinrichtung (6) mit einem Motor angeordnet ist, über die die zweite Linearführung (3) auf der ersten Linearführung (1) verdrehbar gelagert ist,
wobei der Motor ein Direktmotor (7) mit einem Rotor (13) und einem Stator (14) ist, und wobei der Direktmotor (7) koaxial zu einem Axial-Radiallager (8) angeordnet ist, mit dem die zweite Linearführung (3) auf dem ersten Schlitten (2) abgestützt ist.

2. Handhabungseinrichtung nach Anspruch 1, **dadurch gekennzeichnet, dass** das Axial-Radiallager (8) eine radiale Rollenlagerbahn und zumindest eine axiale Rollenlagerbahn aufweist.

3. Handhabungseinrichtung nach Anspruch 1 oder 2, **dadurch gekennzeichnet, dass** der Direktmotor (7) einen radial innenliegenden Stator (14) und einen radial außenliegenden Rotor (13) aufweist, wobei der Stator (14) auf dem ersten Schlitten (2) und die zweite Linearführung (3) auf dem Rotor (13) angeordnet ist.

4. Handhabungseinrichtung nach einem der Ansprüche 1 bis 3, **dadurch gekennzeichnet, dass** die Schwenkeinrichtung (6) einen mit dem Rotor (13) verbundenen Rotordeckel (15) aufweist, an dem die zweite Linearführung (3) angeordnet ist.

5. Handhabungseinrichtung nach einem der Ansprüche 1 bis 4, **dadurch gekennzeichnet, dass** die Schwenkeinrichtung (6) einen radial innenliegenden Dorn (17) aufweist, der sich durch den Stator (14) erstreckt.

6. Handhabungseinrichtung nach Anspruch 5, **dadurch gekennzeichnet, dass** zwischen dem Dorn (17) und dem Stator (14) ein Wälzlager (18) angeordnet ist.

7. Handhabungseinrichtung nach einem der Ansprüche 1 bis 6, **dadurch gekennzeichnet, dass** das Handhabungsmodul (5) eine Aufnahmeeinrichtung (12), insbesondere einen Greifer, aufweist.

8. Handhabungseinrichtung nach Anspruch 7, **dadurch gekennzeichnet, dass** das Handhabungsmodul (5) eine dritte Linearführungseinheit (10) aufweist, an der die Aufnahmeeinrichtung (12) angeordnet ist.

9. Handhabungseinrichtung nach einem der Ansprüche 1 bis 8, **dadurch gekennzeichnet, dass** die Schlitten (2, 4, 11) jeweils über einen Linearmotor angetrieben werden.

10. Spritzgussmaschine mit einem Maschinengestell und einer darauf angeordneten Handhabungsmaschine nach einem der Ansprüche 1 bis 9.

## Claims

1. A handling device, particularly for injection moulding systems, comprising a first linear guide (1), a second linear guide (3), which is fastened on a first carriage (2) that can be displaced along the first linear guide (1), and a handling module (5), which is fastened on a second carriage (4) that can be displaced along the second linear guide (3),
wherein a pivoting device (6) with a motor is arranged between the first carriage (2) and the second linear guide (3) in order to rotatably support the second linear guide (3) on the first linear guide (1),
wherein the motor is a direct motor (7) with a rotor (13) and a stator (14), and
wherein the direct motor (7) is arranged coaxial to an axial-radial bearing (8), by means of which the second linear guide (3) is supported on the first carriage (2) .

2. The handling device according to claim 1, **characterized in that** the axial-radial bearing (8) has a radial roller bearing race and at least one axial roller bearing race.

3. The handling device according to claim 1 or 2, **characterized in that** the direct motor (7) has a radially inner stator (14) and a radially outer rotor (13), wherein the stator (14) is arranged on the first carriage (2) and the second linear guide (3) is arranged on the rotor (13).

4. The handling device according to one of claims 1 to 3, **characterized in that** the pivoting device (6) has a rotor cover (15), which is connected to the rotor (13) and on which the second linear guide (3) is arranged.

5. The handling device according to one of claims 1 to 4, **characterized in that** the pivoting device (6) has a radially inner mandrel (17) that extends through the stator (14).

6. The handling device according to claim 5, **characterized in that** a rolling bearing (18) is arranged between the mandrel (17) and the stator (14).

7. The handling device according to one of claims 1 to 6, **characterized in that** the handling module (5) has a receiving device (12), particularly a gripper.

8. The handling device according to claim 7, **characterized in that** the handling module (5) has a third linear guide unit (10), on which the receiving device (12) is arranged.

9. The handling device according to one of claims 1 to 8, **characterized in that** the carriages (2, 4, 11) are respectively driven by a linear motor.

10. An injection moulding machine with a machine frame and a handling device according to one of claims 1 to 9 arranged thereon.

## Revendications

1. Dispositif de manipulation, notamment de presses d'injection, doté d'un premier guidage linéaire (1), d'un deuxième guidage linéaire (3) fixé sur un premier chariot (2) déplaçable le long du premier guidage linéaire (1) et d'un module de manipulation (5) fixé sur un deuxième chariot (4) déplaçable le long du deuxième guidage linéaire (3),
entre le premier chariot (2) et le deuxième guidage linéaire (3) étant placé un dispositif de pivotement (6) avec un moteur, par l'intermédiaire duquel le deuxième guidage linéaire (3) est logé en étant apte à tourner sur le premier guidage linéaire (1),
le moteur étant un moteur direct (7) avec un rotor (13) et un stator (14), et
le moteur direct (7) étant placé de manière coaxiale par rapport à un roulement axial-radial (8) par lequel le deuxième guidage linéaire (3) s'appuie sur le premier chariot (2).

2. Dispositif de manipulation selon la revendication 1, **caractérisé en ce que** le roulement axial-radial (8) comporte une piste de roulement à rouleaux radiale et au moins une piste de roulement à rouleaux axiale.

3. Dispositif de manipulation selon la revendication 1 ou 2, **caractérisé en ce que** le moteur direct (7) comporte à l'intérieur en direction radiale un stator (14) et à l'extérieur en direction radiale un rotor (13), le stator (14) étant placé sur le premier chariot (2) et le deuxième guidage linéaire (3) étant placé sur le rotor (13).

4. Dispositif de manipulation selon l'une quelconque des revendications 1 à 3, **caractérisé en ce que** le dispositif de pivotement (6) comporte un couvercle de rotor (15) relié avec le rotor (13), sur lequel est placé le deuxième guidage linéaire (3).

5. Dispositif de manipulation selon l'une quelconque des revendications 1 à 4, **caractérisé en ce que** le dispositif de pivotement (6) comporte à l'intérieur en direction radiale un mandrin (17) qui s'étend à travers le stator (14).

6. Dispositif de manipulation selon la revendication 5, **caractérisé en ce qu'**entre le mandrin (17) et le stator (14) est placé un palier à roulement (18).

7. Dispositif de manipulation selon l'une quelconque des revendications 1 à 6, **caractérisé en ce que** le module de manipulation (5) comporte un dispositif récepteur (12), notamment un grappin.

8. Dispositif de manipulation selon la revendication 7, **caractérisé en ce que** le module de manipulation (5) comporte une troisième unité de guidage linéaire (10), sur laquelle est placé le dispositif récepteur (12).

9. Dispositif de manipulation selon l'une quelconque des revendications 1 à 8, **caractérisé en ce que** les chariots (2, 4, 11) sont entraînés chacun par l'intermédiaire d'un moteur linéaire.

10. Presse d'injection, dotée d'un bâti de machine et d'un dispositif de manipulation selon l'une quelconque des revendications 1 à 9, placé sur celui-ci.
